# NEUE EUROPÄISCHE PATENTSCHRIFT

(11) **EP 2 174 103 B2**
(45) Veröffentlichungstag und Bekanntmachung des Hinweises auf die Entscheidung über den Einspruch: **30.10.2019**
(45) Hinweis auf die Patenterteilung: 04.05.2016
(21) Anmeldenummer: 08784259.7
(22) Anmeldetag: 27.06.2008
(51) Int. Cl.: G01G 21/22, G01G 19/50, G01G 19/44

(54) **WAAGE**
SCALE
BALANCE

(30) Priorität: 24.07.2007 DE 102007034899
(43) Veröffentlichungstag der Anmeldung: 14.04.2010
(73) Patentinhaber: Soehnle Industrial Solutions GmbH, 71522 Backnang (DE)
(72) Erfinder: GERSTER, Stephan, 53343 Wachtberg-Pech (DE); SCHURR, Michael, 71540 Murrhardt (DE); STAHL, Albrecht, 71560 Sulzbach (DE)
(74) Vertreter: Hoffmann, Jürgen
(86) Internationale Anmeldenummer: PCT/DE2008/001058
(87) Internationale Veröffentlichungsnummer: WO 2009/012742

(56) Entgegenhaltungen:
- EP-A- 0 080 702
- EP-A- 0 101 247
- EP-A1- 1 380 818
- WO-A-2005/059488
- DE-A1- 10 308 803
- DE-A1- 10 330 433
- DE-A1- 10 359 460
- DE-A1- 19 841 025
- DE-A1- 19 860 296
- DE-A1- 19 910 003
- DE-A1-102006 004 961
- DE-U1-202004 017 239
- FR-A- 2 811 078
- JP-A- 2002 107 207
- US-A- 4 993 506
- US-B1- 6 222 137

## Beschreibung

Die Erfindung betrifft eine Waage, insbesondere Babywaage, mit einer Auflageeinrichtung für ein zu wiegendes Gut oder ein zu wiegendes Baby und mit mindestens zwei mit der Auflageeinrichtung wirkverbundenen Wägezellen, wobei die Wägezellen genau zwei die Auflageeinrichtung zumindest abschnittsweise einfassenden Lagerelementen zugeordnet sind, wobei die zwei Lagerelemente ausschließlich mittels der Auflageeinrichtung miteinander verbunden sind.

Waagen der eingangs genannten Art sind aus der Praxis bekannt und existieren in den unterschiedlichsten Ausführungsformen. Beispielsweise werden im Bereich von Babywaagen sogenannte Tischwaagen mit einer Wägezelle und mit einer aufgesetzten Babyschale als Auflageeinrichtung verwendet. Darüber hinaus ist es auch bekannt, Babywaagen mit vier Wägezellen auszubilden.

Bei Verwendung einer Tischwaage mit aufgesetzter Babyschale ist beispielsweise problematisch, dass die Babyschale üblicherweise länger ist als die Plattform der Tischwaage. Dies führt zu einer Kippgefahr. Des Weiteren sind derartige Babywaagen aufgrund einer großen Bauhöhe und aufgrund eines hohen Eigengewichts nicht für den mobilen Einsatz geeignet. Darüber hinaus weisen diese Babywaagen eine aufwendige Mechanik mit verwindungssteifer Bodenplatte und Lastkreuzen auf. Dabei ist die Realisierung einer Überlastsicherung aufwendig und es existiert ein großer Montageaufwand zur Herstellung der betriebsfertigen Waage.

Bei den bekannten Babywaagen mit vier Wägezellen ist problematisch, dass die Installation von vier Wägezellen hohe Kosten verursacht. Dabei werden häufig sehr einfache Planarwägezellen verwendet, die nur eine geringe Messgenauigkeit bieten und sehr empfindlich auf Verlagerungen des Krafteinleitungspunkts reagieren. Derartige Waagen haben daher eine eingeschränkte Messgenauigkeit und können nur mit relativ grobem Teilungswert ausgeführt werden.

Aus DE 198 41 025 A1 ist eine Plattformwaage, mit einem Unterteil bekannt. Das Unterteil weist Kanten und Falze auf und trägt sogenannte Kraftrückführungselemente. Auf die Kraftrückführungselemente ist eine Deckplatte und auf diese wiederum eine Abdeckung aufgelegt.

Aus FR 2 811 078 ist eine klappbare Waage bekannt, die zwei Wiegeschienen aufweist. Die Wiegeschienen sind mittels zweier Gelenkarme, deren Mittelgelenke in der Aufklappstellung arretierbar sind, permanent miteinander verbunden. In der Aufklappstellung kann eine Platte für das zu wiegende Gut aufgelegt werden.

EP 0 101 247 A2 offenbart eine Waage mit mehreren Wägezellen, die zwischen einer unteren und einer oberen Platte angeordnet sind.

Aus WO 2005/059488 A1 ist eine Wägezelle bekannt, in die ein Neigungsaufnehmer integriert ist.

Aus EP 0 080 702 A2 ist eine Kraftmessvorrichtung bekannt, die einen aus einem einstückigen Block gearbeiteten Parallelogrammlenker und einen Biegemessfühler, in den eine den Parallelogrammlenker belastende Kraft einleitbar ist, aufweist.

US 4 993 506 A offenbart eine Waage, die eine viereckige Bodenplatte mit einer in jeder Ecke festgeschraubten Wägezelle aufweist. Auf die Wägezellen ist eine Lagerplatte aufgelegt.

Aus DE 20 2004 017 239 U1 ist eine Fahrzeugwaage bekannt, deren Waageplatten aus Spannbetonbalken gebildet sind oder Spannbetonkalken beinhalten.

Aus DE 103 30 433 A1 ist eine Brückenwaage für Schwerlasten bekannt. Die Brückenplatten der Brückenwaage, die auf Wägezellen ruhen, sind als Sandwichplatten ausgebildet.

Der vorliegenden Erfindung liegt daher die Aufgabe zugrunde, eine Waage der eingangs genannten Art anzugeben, die eine hohe Messgenauigkeit bei einfachem Aufbau aufweist.

Die voranstehende Aufgabe ist durch eine Waage mit den Merkmalen des Patentanspruchs 1 gelöst. Danach ist die Waage der eingangs genannten Art derart ausgestaltet und weitergebildet, dass die genau zwei Lagerelemente von der Auflageeinrichtung übergriffen sind.

In erfindungsgemäßer Weise ist erkannt worden, dass durch geschickte Anordnung der Wägezellen die voranstehende Aufgabe auf überraschend einfache Weise gelöst wird. Im Konkreten sind die Wägezellen zwei Lagerelementen zugeordnet, die die Auflageeinrichtung zumindest abschnittsweise einfassen. Durch diese Anordnung von Auflageeinrichtung und zugehörigen Lagerelementen ist eine sehr flächige Auflage der Waage auf einem Untergrund realisierbar. Dies führt zu einer hohen Stabilität und der Vermeidung einer Kippgefahr beim Betrieb der Waage. Des Weiteren ist die Verwendung von lediglich zwei Wägezellen, die den Lagerelementen zugeordnet sind, bei der erfindungsgemäßen Waage ausreichend. Dies ermöglicht die Verwendung messgenauer Wägezellen, ohne dass übermäßige Kosten verursacht werden, wie dies beispielsweise bei Waagen mit mehr als zwei Wägezellen der Fall ist.

Folglich ist mit der erfindungsgemäßen Waage eine Waage angegeben, mit der eine hohe Messgenauigkeit bei einfachem Aufbau ermöglicht ist.

Im Hinblick auf eine besonders hohe Messgenauigkeit könnten die Wägezellen als Plattformwägezellen ausgeführt sein. Derartige Plattformwägezellen sind besonders für die Aufnahme exzentrischer Belastungen geeignet, wie sie bei Wiegevorgängen auftreten können. Dabei können Verlagerungen des Krafteinleitungspunkts beim Wiegen kompensiert werden.

Bei einer konkreten Ausgestaltung könnten die Plattformwägezellen als Doppelbiegebalken ausgeführt sein. Diese Bauform bietet eine besonders hohe Messgenauigkeit.

In konstruktiv einfacher Weise könnte jedem Lagerelement mindestens eine und vorzugsweise nur eine Wägezelle zugeordnet sein. Die Lagerelemente könnten beispielsweise an den Stirnseiten oder Längsseiten einer Auflageeinrichtung angeordnet sein, wodurch sich ein besonders stabiler Aufbau der Waage ergibt.

In weiter konstruktiv besonders einfacher Weise könnten die Lagerelemente als Schienen ausgebildet sein. Derartige Schienen sind konstruktiv sehr einfach und in vielen Gestaltungsformen kommerziell erhältlich.

Im Hinblick auf einen konstruktiv einfachen und die Wägezellen schützenden Aufbau könnten die Wägezellen in die Lagerelemente oder Schienen eingebaut sein. Hieraus ergibt sich ein besonders robuster Aufbau der Waage.

In weiter konstruktiv einfacher Weise könnte jedes Lagerelement einen unteren und einen oberen Träger aufweisen, an denen die Wägezellen jeweils befestigt, vorzugsweise verschraubt, sind. Während des Wiegens eines zu wiegenden Guts oder eines zu wiegenden Babys wird über die Auflageeinrichtung eine Kraft auf den oberen Träger ausgeübt, der sich daraufhin relativ zum unteren Träger verschiebt. Das Ausmaß der Verschiebung wird über die Wägezellen gemessen.

In konstruktiv einfacher Weise könnten der untere und/oder der obere Träger als L- oder U-Profil ausgebildet sein. Hierdurch ist eine besonders sichere Aufnahme einer Wägezelle im Lagerelement oder in der Schiene ermöglicht.

Zur sicheren Auflage der Waage auf einem Untergrund könnten an dem unteren Träger mindestens zwei Füße oder Stellfüße angeordnet sein. Eine besonders einfache Höhenverstellung könnte dadurch realisiert sein, dass die Stellfüße jeweils einen Rändelgriff aufweisen, der vorzugsweise über den Rand einer Auflageeinrichtung hinausragt, so dass ein einfaches Betätigen des Rändelgriffs per Hand möglich ist.

Hinsichtlich einer sicheren Anordnung der Auflageeinrichtung am Lagerelement könnte der obere Träger mindestens eine Aufnahme für die Auflageeinrichtung aufweisen. Eine derartige Aufnahme könnte in besonders einfacher Weise durch mindestens eine Ausnehmung oder mindestens einen Durchgang im Träger gebildet sein.

Zur Vermeidung einer Fehlfunktion oder Beschädigung der Waage könnte mindestens ein Lagerelement eine Überlastsicherung aufweisen. Eine derartige Überlastsicherung könnte in konstruktiv einfacher Weise und zur Gewährleistung einer hohen Funktionssicherheit zwischen den Trägern angeordnet sein.

In besonders praktischer Weise könnten die Lagerelemente komplett vormontiert sein. Hierdurch ergibt sich eine einfache Handhabung der Waage für einen Benutzer.

Bei einer konkreten Ausgestaltung der Waage könnte die Auflageeinrichtung eine Babyschale oder Plattform aufweisen. Bei der Frage der Ausgestaltung der Auflageeinrichtung ist auf eine sichere Positionierung eines zu wiegenden Guts oder eines zu wiegenden Babys zu achten.

In Hinblick auf einen mobilen Einsatz könnte die Waage möglichst kompakt ausgestaltet sein, wobei eine Zusammenschiebbarkeit der Waage von besonderem Vorteil ist. Insbesondere bei Anordnung der Lagerelemente oder Schienen an Stirnseiten der Waage könnte eine derartige Zusammenschiebbarkeit realisiert werden. Hierzu könnte die Auflageeinrichtung im Konkreten zwei Rohre mit einem zwischen die Rohre spannbaren Tuch oder Gewebe aufweisen. Die Rohre könnten hierbei teleskopartig ineinander schiebbar sein, um einen einfachen Transport oder ein einfaches Verstauen der Waage in kompakter Form zu ermöglichen.

Insbesondere im Fall einer zusammenschiebbaren Waage könnte diese Waage mit vier Wägezellen ausgestattet sein.

Im Hinblick auf beispielsweise die Messung der Körpergröße eines Babys könnte die Waage eine Längenmesseinrichtung oder einen Längenmessstab aufweisen. Im Falle einer Längenmesseinrichtung könnten die Rohre als Führung verwendet werden, wobei hierbei das Prinzip eines Messschiebers realisiert wäre. Hierzu könnte die Waage einen Anschlag für beispielsweise die Füße eines Babys aufweisen.

Zur einfachen Kompensation einer Schrägstellung der Waage bei einer Messung könnte die Waage einen Neigungssensor aufweisen oder könnte der Waage ein Neigungssensor zugeordnet sein. Ein über eine Anzeigeeinrichtung angezeigter Gewichtswert könnte unter Berücksichtigung der mittels des Neigungssensors aufgenommenen Daten ermittelt werden.

Mit der erfindungsgemäßen Waage ist eine Wage mit hoher Messgenauigkeit und einfachem Aufbau realisiert. Aufgrund der Vormontierbarkeit der Lagerelemente oder Schienen werden bei der Endmontage der Waage mit geringem Montageaufwand nur noch die Schienen oder Lagerelemente mit der Auflageeinrichtung verbunden. Letztendlich bestimmen die Schienen oder Lagerelemente die Gesamthöhe der Waage. Hierzu wird in vorteilhafter Weise die Auflageeinrichtung oder Babyschale oder Plattform zwischen den Schienen oder Lagerelementen abgesenkt.

Die Lagerelemente oder Schienen könnten entweder an den Längs- oder Stirnseiten der Auflageeinrichtung oder der Babyschale angeordnet sein. Bei Anordnung der Schienen oder Lagerelemente an den Stirnseiten können die Schienen oder Lagerelemente besonders kurz ausgeführt sein. Dabei ist auch die geringere exzentrische Belastung der Wägezellen von Vorteil.

Die erfindungsgemäße Waage eignet sich in besonderer Weise für den mobilen Einsatz, weist eine geringe Bauhöhe und kompakte Abmessungen sowie ein niedriges Eigengewicht auf. Die Auflageeinrichtung kann quasi beliebig lang ausgebildet sein.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche, andererseits auf die nachfolgende Erläuterung zweier Ausführungsbeispiele der erfindungsgemäßen Waage anhand der Zeichnung zu verweisen. In Verbindung mit der Erläuterung der bevorzugten Ausführungsbeispiele der erfindungsgemäßen Waage anhand der Zeichnung werden auch im Allgemeinen bevorzugte Ausgestaltungen und Weiterbildungen
der Lehre erläutert. In der Zeichnung zeigen
- **Fig.** 1: in einer perspektivischen Ansicht, in einer Seitenansicht sowie in einer teilweise geschnittenen Ansicht ein Lagerelement eines Ausführungsbeispiels einer erfindungsgemäßen Waage,
- **Fig. 2**: in einer perspektivischen Ansicht, in einer Draufsicht sowie in einer teilweise geschnittenen Darstellung ein Ausführungsbeispiel einer erfindungsgemäßen Waage und
- **Fig. 3**: in einer perspektivischen Ansicht, in einer Draufsicht sowie in einer teilweise geschnittenen Darstellung ein zweites Ausführungsbeispiel einer erfindungsgemäßen Waage.

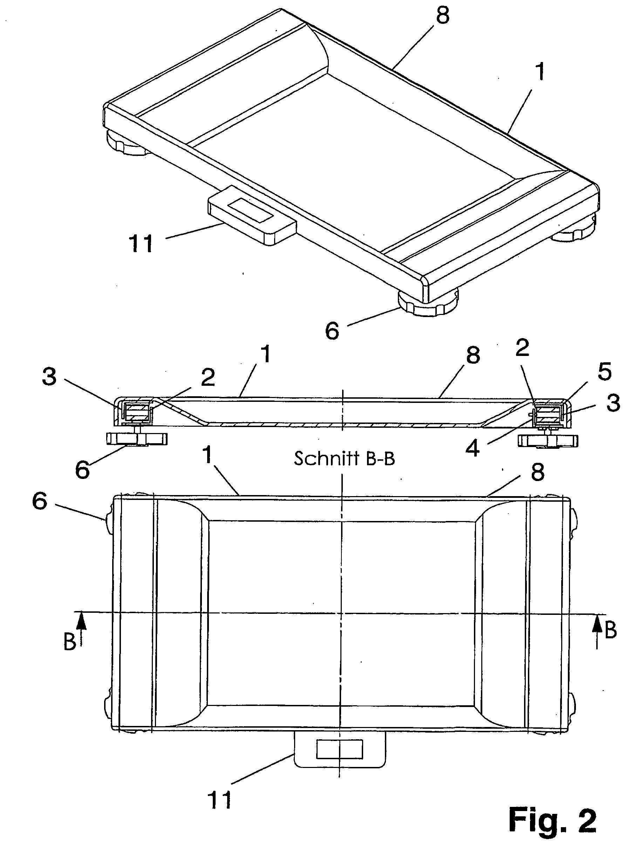

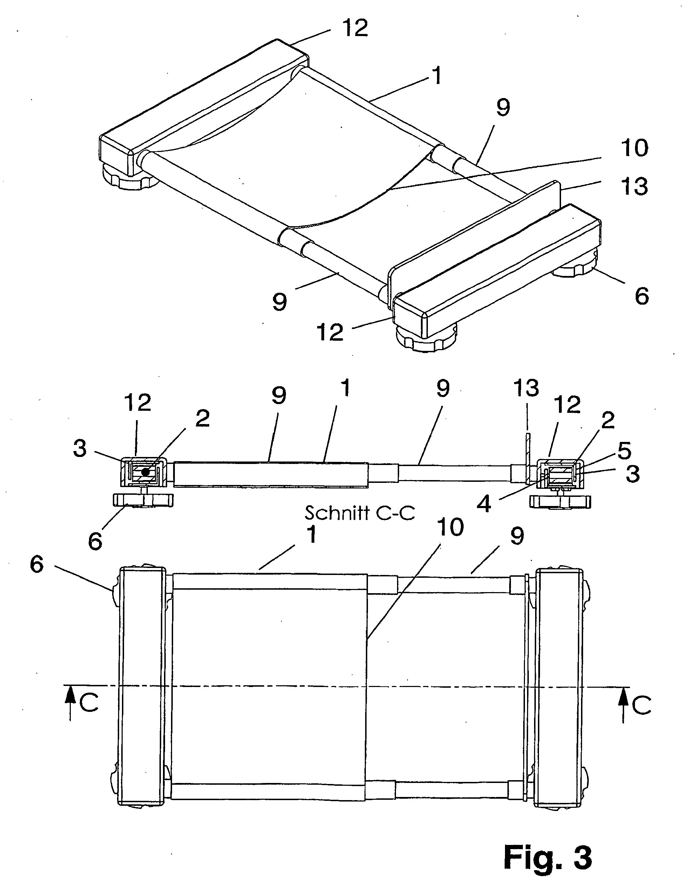

Die **Fig. 2** und **Fig. 3** zeigen jeweils in einer perspektivischen Darstellung, in einer Draufsicht sowie in einer teilweise geschnittenen Seitenansicht zwei Ausführungsbeispiele einer erfindungsgemäßen Waage, die jeweils als Babywaage ausgebildet ist. Die Waagen weisen eine Auflageeinrichtung 1 für ein zu wiegendes Baby und zwei mit der Auflageeinrichtung 1 wirkverbundene Wägezellen 2 auf, die jeweils in der teilweise geschnittenen Seitenansicht erkennbar sind. Im Hinblick auf eine hohe Messgenauigkeit und einen einfachen Aufbau sind die Wägezellen 2 zwei Lagerelementen 3 zugeordnet, die die Auflageeinrichtung 1 an den Stirnseiten abschnittsweise einfassen.

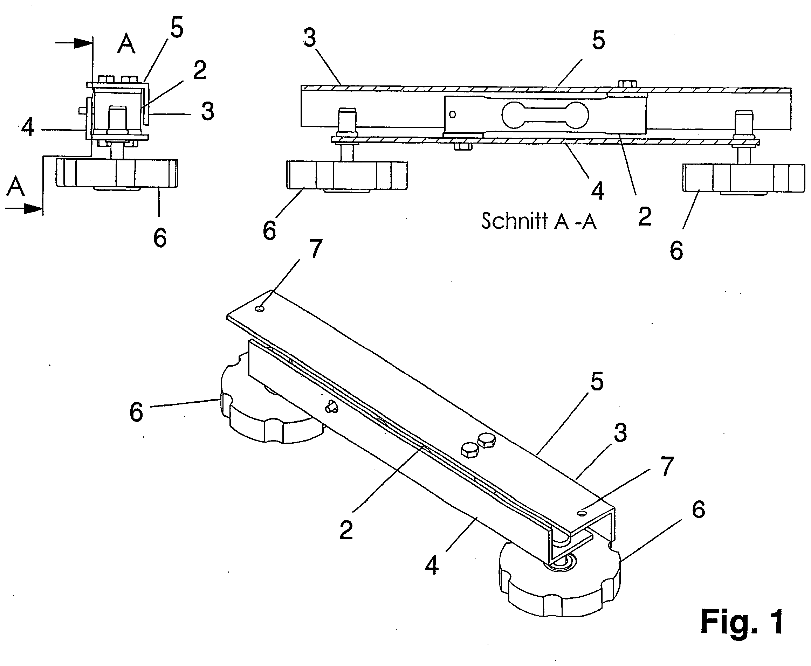

**Fig. 1** zeigt in einer perspektivischen Darstellung, in einer Seitenansicht sowie in einer teilweise geschnittenen Darstellung in größerem Detail das bei den in den **Fig. 2** und **Fig. 3** gezeigten Ausführungsbeispielen verwendete Lagerelement 3. In jedem Lagerelement 3 ist eine Wägezelle 2 angeordnet, die im Hinblick auf eine hohe Messgenauigkeit als Plattformwägezelle ausgebildet sind.

Die Lagerelemente 3 sind schienenförmig ausgebildet und weisen einen unteren und einen oberen Träger 4 und 5 auf, an denen die Wägezellen 2 jeweils befestigt sind. Im Konkreten sind die Wägezellen 2 an den Trägern 4 und 5 mittels zweier Schrauben angeschraubt. Beide Träger 4 und 5 sind als L-Profil ausgebildet, wobei die Träger 4 und 5 derart zueinander angeordnet sind, dass zwischen den Trägern 4 und 5 ein Hohlraum zur Aufnahme der Wägezelle 2 ausgebildet ist.

An dem unteren Träger 4 sind zwei Stellfüße 6 mit jeweils einem Rändelgriff angeordnet, um eine horizontale Ausrichtung der Waage zu ermöglichen.

Im oberen Träger 5 sind zwei Durchgänge 7 oder Bohrungen ausgebildet, um die Auflageeinrichtung 1 sicher mit dem Lagerelement 3 zu koppeln. Das Lagerelement 3 dient quasi als Schutzgehäuse für die Wägezellen 2.

Bei dem in **Fig. 2** gezeigten ersten Ausführungsbeispiel weist die Auflageeinrichtung 1 eine Babyschale 8 auf. Die Babyschale 8 ist derart ausgebildet, dass die Lagerelemente 3 von der Babyschale 8 übergriffen werden. Hierdurch verbleiben die Lagerelemente 3 bei zusammengebauter Waage quasi unsichtbar und geschützt.

Bei dem in **Fig. 3** gezeigten zweiten Ausführungsbeispiel weist die Auflageeinrichtung 1 zwei teleskopartig ineinander schiebbare Rohre 9 mit einem zwischen die Rohre 9 spannbaren Tuch 10 auf. Bei dieser Ausgestaltung ist ein einfaches Zusammenschieben der Waage und damit eine kompakte Transport- und Lagerstellung realisierbar.

Das in **Fig. 2** gezeigte Ausführungsbeispiel weist des Weiteren einen Griff 11 an der Auflageeinrichtung 1 bzw. Babyschale 8 auf, um ein einfaches Transportieren der Waage zu ermöglichen.

Bei dem in **Fig. 3** gezeigten zweiten Ausführungsbeispiel weist die Auflageeinrichtung 1 an ihren stirnseitigen Enden ein U-Profil 12 zum Übergreifen des Lagerelements 3 auf. Des Weiteren ist an einem Ende der Auflageeinrichtung 1 ein Anschlag 13 vorgesehen, um gegebenenfalls einen Fixpunkt für eine Messung der Größe eines auf der Waage befindlichen Babys bereitzustellen.

Hinsichtlich weiterer vorteilhafter Ausgestaltungen der erfindungsgemäßen Waage wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Waage lediglich zur Erörterung der beanspruchten Lehre dienen, diese jedoch nicht auf diese Ausführungsbeispiele einschränken.

### Bezugszeichenliste

- 1: Auflageeinrichtung
- 2: Wägezelle
- 3: Lagerelement
- 4: unterer Träger
- 5: oberer Träger
- 6: Stellfuß
- 7: Durchgang
- 8: Babyschale
- 9: Rohr
- 10: Tuch
- 11: Griff
- 12: U-Profil
- 13: Anschlag

## Patentansprüche

1. Waage, insbesondere Babywaage, mit einer Auflageeinrichtung (1) für ein zu wiegendes Gut oder ein zu wiegendes Baby und mit mindestens zwei mit der Auflageeinrichtung (1) wirkverbundenen Wägezellen (2), wobei die Wägezellen (2) genau zwei die Auflageeinrichtung (1) zumindest abschnittsweise einfassenden Lagerelementen (3) zugeordnet sind, wobei die zwei Lagerelemente (3) ausschließlich mittels der Auflageeinrichtung (1) miteinander verbunden sind, **dadurch gekennzeichnet, dass** die genau zwei Lagerelemente von der Auflageeinrichtung übergriffen sind.

2. Waage nach Anspruch 1, **dadurch gekennzeichnet, dass** die Wägezellen (2) als Plattformwägezellen ausgeführt sind und/oder dass die Wägezellen (2) als Plattformwägezellen ausgeführt sind, wobei die Plattformwägezellen als Doppelbiegebalken ausgeführt sind.

3. Waage nach einem der Ansprüche 1 oder 2, **dadurch gekennzeichnet, dass** jedem Lagerelement (3) mindestens eine Wägezelle (2) zugeordnet ist.

4. Waage nach einem der Ansprüche 1 bis 3, **dadurch gekennzeichnet, dass** die Lagerelemente (3) als Schienen ausgebildet sind und/oder die Wägezellen (2) in die Lagerelemente (3) oder Schienen eingebaut sind.

5. Waage nach einem der Ansprüche 1 bis 4, **dadurch gekennzeichnet, dass** jedes Lagerelement (3) einen unteren (4) und einen oberen Träger (5) aufweist, an denen die Wägezellen (2) jeweils befestigt, vorzugsweise verschraubt, sind und/oder dass jedes Lagerelement (3) einen unteren (4) und einen oberen Träger (5) aufweist, an denen die Wägezellen (2) jeweils befestigt, vorzugsweise verschraubt, sind, wobei der untere (4) und/oder der obere Träger (5) als L- oder U-Profil ausgebildet sind oder ist.

6. Waage nach Anspruch 5, **dadurch gekennzeichnet, dass** an dem unteren Träger (4) mindestens zwei Füsse oder Stellfüsse (6) angeordnet sind.

7. Waage nach Anspruch 6, **dadurch gekennzeichnet, dass** die Stellfüsse (6) einen Rändelgriff aufweisen.

8. Waage nach einem der Ansprüche 5 bis 7, **dadurch gekennzeichnet, dass** der obere Träger (5) mindestens eine Aufnahme für die Auflageeinrichtung (1) aufweist.

9. Waage nach einem der Ansprüche 1 bis 8, **dadurch gekennzeichnet, dass** die Auflageeinrichtung (1) zwischen den Schienen oder Lagerelementen (3) zur Endmontage der Waage absenkbar ist.

10. Waage nach einem der Ansprüche 1 bis 9, **dadurch gekennzeichnet, dass** mindestens ein Lagerelement (3) eine Überlastsicherung aufweist und/oder eine Überlastsicherung zwischen den Trägern (4, 5) angeordnet ist.

11. Waage nach einem der Ansprüche 1 bis 10, **dadurch gekennzeichnet, dass** die Auflageeinrichtung (1) eine Babyschale (8) oder Plattform aufweist.

12. Waage nach einem der Ansprüche 1 bis 10, **dadurch gekennzeichnet, dass** die Waage zusammenschiebbar ist.

13. Waage nach einem der Ansprüche 1 bis 12, **dadurch gekennzeichnet, dass** a) die Auflageeinrichtung (1) zwei Rohre (9) mit einem zwischen die Rohre (9) spannbaren Tuch (10) oder Gewebe aufweist und/oder dass b) die Auflageeinrichtung (1) zwei Rohre (9) mit einem zwischen die Rohre (9) spannbaren Tuch (10) oder Gewebe aufweist und die Rohre (9) teleskopartig ineinander schiebbar sind.

14. Waage nach einem der Ansprüche 1 bis 13, **dadurch gekennzeichnet, dass** die Waage eine Längenmesseinrichtung oder einen Längenmessstab aufweist und/oder dass die Waage eine Längenmesseinrichtung oder einen Längenmessstab aufweist, wobei die Rohre (9) als Führung bei der Längenmesseinrichtung verwendbar sind.

15. Waage nach einem der Ansprüche 1 bis 14, **dadurch gekennzeichnet, dass** die Waage einen Neigungssensor aufweist oder dass der Waage ein Neigungssensor zugeordnet ist.

## Claims

1. Scale, in particular a baby scale, having a supporting device (1) for goods to be weighed or a baby to be weighed and having at least two load cells (2) operatively connected to the supporting device (1), wherein the load cells (2) are assigned to exactly two bearing elements (3) surrounding the supporting device (1), at least in some sections, the two bearing elements (3) being connected to each other exclusively by means of the supporting device (1), **characterized in that** the exactly two bearing elements (3) are overgrabbed by the supporting device (1).

2. Scale according to Claim 1, **characterized in that** the load cells (2) are embodied as platform load cells and/or **in that** the load cells (2) are embodied as platform load cells, the platform load cells being embodied as a double bending beam.

3. Scale according to either of Claims 1 and 2, **characterized in that** each bearing element (3) is assigned at least one load cell (2).

4. Scale according to one of Claims 1 to 3, **characterized in that** the bearing elements (3) are formed as rails and/or the load cells (2) are incorporated in the bearing elements (3) or rails.

5. Scale according to one of Claims 1 to 4, **characterized in that** each bearing element (3) has a lower (4) and an upper carrier (5), to which the load cells (2) are each fixed, preferably screwed, and/or **in that** each bearing element (3) has a lower (4) and an upper carrier (5) to which the load cells (2) are each fixed, preferably screwed, the lower (4) and/or the upper carrier (5) being formed as an L or U profile.

6. Scale according to Claim 5, **characterized in that** at least two feet or adjustable feet (6) are arranged on the lower carrier (4).

7. Scale according to Claim 6, **characterized in that** the adjustable feet (6) have a knurled grip.

8. Scale according to one of Claims 5 to 7, **characterized in that** the upper carrier (5) has at least one holder for the supporting device (1).

9. Scale according to one of Claims 1 to 8, **characterized in that** the supporting device (1) can be lowered between the rails or bearing elements (3) for the final assembly of the scale.

10. Scale according to one of Claims 1 to 9, **characterized in that** at least one bearing element (3) has an overload safety device and/or an overload safety device is arranged between the carriers (4, 5).

11. Scale according to one of Claims 1 to 10, **characterized in that** the supporting device (1) has a baby carrier (8) or platform.

12. Scale according to one of Claims 1 to 10, **characterized in that** the scale is telescopic.

13. Scale according to one of Claims 1 to 12, **characterized in that** a) the supporting device (1) has two tubes (9) with a cloth (10) or fabric that can be stretched between the tubes (9) and/or **in that** b) the supporting device (1) has two tubes (9) with a cloth (10) or fabric that can be stretched between the tubes (9) and the tubes (9) can be pushed into one another in the manner of a telescope.

14. Scale according to one of Claims 1 to 13, **characterized in that** the scale has a length measuring device or a length scale and/or **in that** the scale has a length measuring device or a length scale, it being possible for the tubes (9) to be used as a guide in the length measuring device.

15. Scale according to one of Claims 1 to 14, **characterized in that** the scale has an inclinometer or **in that** the scale is assigned an inclinometer.

## Revendications

1. Balance, notamment pèse-bébé, avec un dispositif d'appui (1) pour un produit à peser ou un bébé à peser et avec au moins deux cellules de pesée (2) activement reliées au dispositif d'appui (1), les cellules de pesée (2) étant associés à exactement deux éléments de palier (3) bordant au moins en partie le dispositif d'appui (1), les deux éléments de palier (3) étant exclusivement reliés entre eux à l'aide du dispositif d'appui (1), **caractérisée en ce que** les exactement deux éléments de palier (3) sont recouverts par le dispositif d'appui (1).

2. Balance selon la revendication 1, **caractérisée en ce que** les cellules de pesée (2) sont réalisées sous la forme de cellules de pesée à plateforme et/ou que les cellules de pesée (2) sont réalisées sous la forme de cellules de pesée à plateforme, les cellules de pesée à plateforme étant réalisées sous la forme de double barres flexibles.

3. Balance selon l'une quelconque des revendications 1 ou 2, **caractérisée en ce que** chaque élément de palier (3) est associé à au moins une cellule de pesée (2).

4. Balance selon l'une quelconque des revendications 1 à 3, **caractérisée en ce que** les éléments de palier (3) sont réalisés sous la forme de rails et/ou que les cellules de pesée (2) sont encastrées dans les éléments de palier (3) ou les rails.

5. Balance selon l'une quelconque des revendications 1 à 4, **caractérisée en ce que** chaque élément de palier (3) comporte un support supérieur (5) et inférieur (4) au niveau desquels les cellules de pesée (2) sont respectivement fixées, de préférence vissées et/ou que chaque élément de palier (3) comporte un support supérieur (5) et inférieur (4) au niveau desquels les cellules de pesée (2) sont respectivement fixées, de préférence vissées, le ou les supports supérieur (5) et/ou inférieur (4) étant réalisés sous la forme d'un profilé en L ou en U.

6. Balance selon la revendication 5, **caractérisée en ce qu'**au moins deux pieds ou pieds de réglage (6) sont disposés au niveau du support inférieur (4).

7. Balance selon la revendication 6, **caractérisée en ce que** les pieds de réglage (6) comportent une poignée moletée.

8. Balance selon l'une quelconque des revendications 5 à 7, **caractérisée en ce que** le support supérieur (5) comporte au moins un logement pour le dispositif d'appui (1).

9. Balance selon l'une quelconque des revendications 1 à 8, **caractérisée en ce que** le dispositif d'appui (1) peut être descendu entre les rails ou éléments de palier (3) en vue de réaliser le montage final de la balance.

10. Balance selon l'une quelconque des revendications 1 à 9, **caractérisée en ce qu'**au moins un élément de palier (3) comporte une sécurité anti-surcharge et/ou qu'une protection anti-surcharge est disposée entre les supports (4, 5).

11. Balance selon l'une quelconque des revendications 1 à 10, **caractérisée en ce que** le dispositif d'appui (1) comporte une coque pour bébé (8) ou une plateforme.

12. Balance selon l'une quelconque des revendications 1 à 10, **caractérisée en ce que** la balance peut être poussée de façon conjointe.

13. Balance selon l'une quelconque des revendications 1 à 12, **caractérisée en ce que** a) le dispositif d'appui (1) comporte deux tubes (9) avec une toile (10) ou un tissu pouvant être tendus entre les tubes (9) et/ou que b) le dispositif d'appui (1) comporte deux tubes (9) avec une toile (10) ou un tissu pouvant être tendus entre les tubes (9) et les tubes (9) pouvant être poussés l'un dans l'autre de façon télescopique.

14. Balance selon l'une quelconque des revendications 1 à 13, **caractérisée en ce que** la balance comporte un dispositif de mesure de longueur ou une tige de mesure de longueur et/ou que la balance comporte un dispositif de mesure de longueur ou une tige de mesure de longueur, les tubes (9) pouvant être utilisés sous la forme d'un guide dans le dispositif de mesure de longueur.

15. Balance selon l'une quelconque des revendications 1 à 14, **caractérisée en ce que** la balance comporte un capteur d'inclinaison ou qu'un capteur d'inclinaison est associé à la balance.
